# EUROPEAN PATENT APPLICATION

(11) **EP 3 282 156 A1**
(43) Date of publication of application: **14.02.2018**
(21) Application number: 16275111.9
(22) Date of filing: 09.08.2016
(51) Int. Cl.: F16K 5/20

(54) **BALL VALVE SYSTEM AND METHOD**

(71) Applicant: Cameron International Corporation, Houston, TX 77027 (US)
(72) Inventor: Manson, Ronald, Spring, TX Texas 77379 (US); Negrini, Davide, 27058 Voghera (IT)
(74) Representative: Schlumberger Cambridge Research Limited

(57) **Abstract**

A system configured to adjust a seat (38,40) of a ball valve(10) includes a cam-actuated valve that is configured to be controlled via rotation of a stem (20) coupled to a ball (16) of the ball valve. The cam-actuated valve is configured to enable a flow of fluid at a first pressure to an opening extending through a body of the ball valve to drive the seat of the ball valve away from the ball when the cam-actuated valve is in a first position.

## Description

### BACKGROUND

This section is intended to introduce the reader to various aspects of art that may be related to various aspects of the present invention, which are described and/or claimed below. This discussion is believed to be helpful in providing the reader with background information to facilitate a better understanding of the various aspects of the present invention. Accordingly, it should be understood that these statements are to be read in this light, and not as admissions of prior art.

Ball valves are employed to open or close to enable or block a flow of fluid in a variety of applications. Typical ball valves may include a body, an adapter, a rotatable ball disposed within the body and the adapter, and a stem coupled to the ball. Trunnion ball valves use seats that physically contact the ball of the ball valve. However, as the ball rotates within the ball valve from a closed position to an open position, the fluid under pressure drives the seat into the ball, thereby increasing torque needed to move the ball to the open position and/or causing wear on contacting surfaces of the ball and/or the seat, for example.

### BRIEF DESCRIPTION OF THE DRAWINGS

Various features, aspects, and advantages of the present invention will become better understood when the following detailed description is read with reference to the accompanying figures in which like characters represent like parts throughout the figures, wherein:
FIG. 1 is a cross-sectional side view of a ball valve, in accordance with an embodiment of the present disclosure;
FIG. 2 is a cross-sectional side view of a portion of the ball valve of FIG. 1 taken within line 2-2, wherein a seat contacts a ball of the ball valve;
FIG. 3 is a cross-sectional side view of the portion of the ball valve of FIG. 2, wherein the seat is separated from the ball of the ball valve;
FIG. 4 is a flow chart of a method for controlling a position of the seat of the ball valve of FIG. 1, in accordance with an embodiment of the present disclosure;
FIG. 5 is a schematic diagram of a hydraulic system that is configured to control a position of the seat of the ball valve of FIG. 1, in accordance with an embodiment of the present disclosure;
FIG. 6 is a schematic diagram of another hydraulic system that is configured to control a position of the seat of the ball valve of FIG. 1, in accordance with an embodiment of the present disclosure;
FIG. 7 is a schematic diagram of another hydraulic system that is configured to control a position of the seat of the ball valve of FIG. 1, in accordance with an embodiment of the present disclosure;
FIG. 8 is a schematic diagram of another hydraulic system having an electronic controller and that is configured to control a position of the seat of the ball valve of FIG. 1, in accordance with an embodiment of the present disclosure;
FIG. 9 is a schematic diagram of a hydraulic booster charger that may be used to supply hydraulic fluid to the hydraulic systems of FIGS. 5-8, in accordance with an embodiment of the present disclosure;
FIG. 10 is a schematic diagram of a pneumatic system that is configured to control a position of the seat of the ball valve of FIG. 1, in accordance with an embodiment of the present disclosure;
FIG. 11 is a schematic diagram of another pneumatic system that is configured to control a position of the seat of the ball valve of FIG. 1, in accordance with an embodiment of the present disclosure;
FIG. 12 is a schematic diagram of another pneumatic system that is configured to control a position of the seat of the ball valve of FIG. 1, in accordance with an embodiment of the present disclosure;
FIG. 13 is a schematic diagram of another pneumatic system having an electronic controller and that is configured to control a position of the seat of the ball valve of FIG. 1, in accordance with an embodiment of the present disclosure; and
FIG. 14 is a cross-sectional side view of an alternative arrangement of components within the portion of the ball valve of FIG. 2, in accordance with an embodiment of the present disclosure.

### DETAILED DESCRIPTION OF SPECIFIC EMBODIMENTS

One or more specific embodiments of the present invention will be described below. These described embodiments are only exemplary of the present invention. Additionally, in an effort to provide a concise description of these exemplary embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain embodiments of the present disclosure include systems and methods configured to adjust a seat of a ball valve. In particular, the systems and methods disclosed herein may be configured to drive the seat away from a ball of the ball valve as the ball rotates through a portion of its path between a closed position and an open position. In certain embodiments, the systems and methods may drive the seat to reduce a contact force between contacting surfaces of the seat and the ball as the ball rotates through a portion of its path and/or to separate (e.g., create a gap or clearance between) the seat from the ball as the ball rotates through a portion of its path. The systems and methods disclosed herein may advantageously enable the ball valve to be opened under full differential pressure, increase operating speeds, increase sealing reliability, reduce wear on components of the ball valve, increase life of the components, and/or reduce actuator size, cost, and weight, for example. The ball valve may be utilized as part of any suitable fluid-handling system, such as an energy-acquisition or processing system (e.g., a hydrocarbon-production or processing system, such as a subsea or surface oil or gas well, a pipeline, a natural-gas processing terminal, a refinery, or a natural-gas powered electrical plant, or the like).

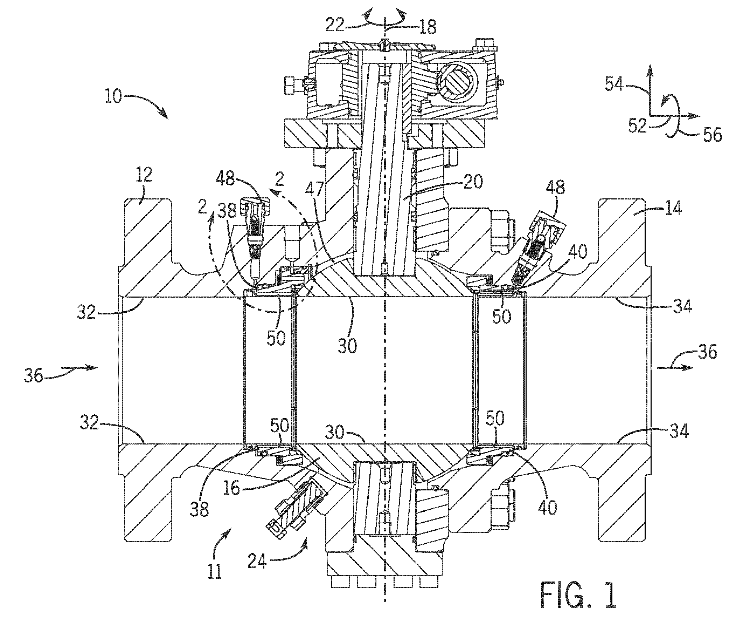

Turning now to the figures, FIG. 1 is a cross-sectional side view of a ball valve 10, in accordance with an embodiment. The ball valve 10 includes a housing 11, which may be formed by an annular body 12 and an annular adapter 14. In the illustrated embodiment, the body 12 and the adapter 14 of the ball valve 10 are configured to mate with each other such that a seal is created between the body 12 and the adapter 14. The ball valve 10 includes a ball 16 configured to rotate between the illustrated open position 24 (e.g., approximately 90 degrees) and a closed position (e.g., approximately 0 degrees) about a rotational axis 18, as shown by arrow 22. As shown, the ball 16 is coupled to a stem 20 such that rotation of the stem 20 (e.g., via a hydraulic, pneumatic, or electronic actuator) causes the ball 16 to rotate.

In the open position 24, the ball valve 10 enables fluid flow through the ball valve 10. As shown, in the open position 24, a bore 30 of the ball 16 is aligned with a bore 32 of the body 12 and a bore 34 of the adapter 14, such that fluid may pass through the ball valve 10. In general, a fluid 36 may enter through either the body 12 or the adapter 14 and exit through the other. For example, in the illustrated embodiment, the fluid 36 enters the bore 32 of the body 12 from a first fluid line or passageway, flows through the bore 30 of the ball 16, and exits the bore 34 of the adapter 14 into a second fluid line or passageway. In the closed position, the bore 30 of the ball 16 is rotated perpendicular to the bores 32, 34 of the body 12 and the adapter 14, thereby substantially blocking the flow of the fluid 36 through the ball valve 10. In the closed position, a cavity pressure within a cavity 47 of the ball valve 10 may be less than a line pressure in the bore 32 of the body 12.

As illustrated in FIG. 1, the ball valve 10 also includes two annular seats, a first seat 38 (e.g., a first annular seat or an upstream annular seat) positioned between the ball 16 and the body 12, and a second seat 40 (e.g., a second annular seat or a downstream annular seat) positioned between the ball 16 and the adapter 14. During operation of the ball valve 10, the seats 38, 40 create respective seals between the ball 16 and the body 12 and between the ball 16 and the adapter 14. In the illustrated embodiment, a retainer 42 (e.g., annular retainer) is coupled to the body 12 proximate to the first seat 38. A space 44 (e.g., an annular space, a sealed space) is defined between the first seat 38 and the retainer 42, and an opening 46 (e.g., channel or passageway) is provided through the body 12 to enable fluid (e.g., working fluid, such as a pressurized gas or liquid) flow into and out of the space 44. As discussed in more detail below, a hydraulic, pneumatic, or electronic control system may adjust the fluid flow into and out of the space 44 as the ball 16 rotates between the closed position and the open position 24. In certain embodiments, the system may adjust the fluid flow to cause a reduction in a contact force between contacting surfaces of the first seat 38 and the ball 16 as the ball 16 rotates and/or to separate the first seat 38 from the ball 16 as the ball 16 rotates (e.g., creating an intermediate gap or clearance).

As shown, the ball valve 10 may include injection ports 48 that are configured to align with and enable fluid communication with injection channels 50 in the seats 38, 40. The injection ports 48 and injection channels 50 facilitate the delivery of lubricating or sealant fluids to the interfaces between the seats 38, 40 and the ball 16. The lubricating fluids reduce the frictional forces generated between the ball 16 and the seats 38, 40 when the ball 16 is rotated between the open position 24 and the closed position. To facilitate discussion, the ball valve 10 and its components may be described with reference to an axial axis or direction 52, a radial axis or direction 54, and a circumferential axis or direction 56.

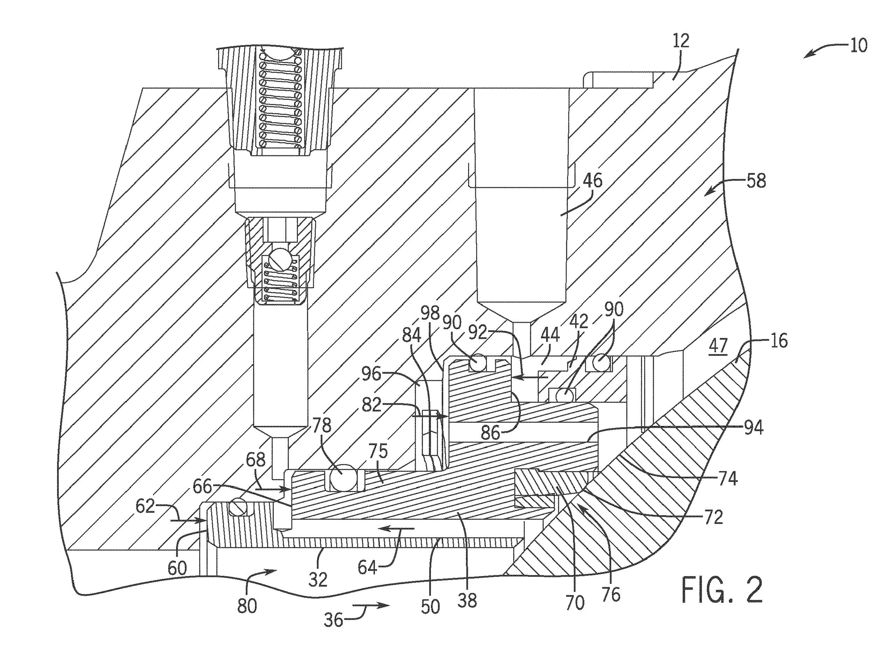

FIG. 2 is a cross-sectional side view of a portion of the ball valve 10 of FIG. 1 taken within line 2-2. In the illustrated embodiment, the ball valve 10 is in a closed position 58 (e.g., approximately 0 degrees). In the closed position 58, the bore 30 of the ball 16 is rotated perpendicular to the bores 32, 34 of the body 12 and the adapter 14, thereby substantially blocking the flow of the fluid 36 through the ball valve 10. Furthermore, when the ball valve 10 is in the closed position 58, a contacting surface 72 (e.g., sealing face) of the first seat 38 contacts an outer surface 74 of the ball 16 and forms a seal 76 (e.g., annular seal) with the ball 16. In certain embodiments, the contacting surface 72 is part of an insert 70 (e.g., annular insert or annular seal) coupled to a body 75 of the first seat 38.

When the ball valve 10 is in the closed position 58, the seal 76 and a main seal 78 (e.g., annular seal) substantially block a flow of the fluid 36 across the first seat 38. In certain circumstances, after the ball valve 10 reaches the closed position 58, the cavity pressure within the cavity 47 of the ball valve 10 is relieved or reduced (e.g., via a decrease in the pipeline downstream pressure or a valve or other pressure relief system). Accordingly, a pressure on a first side 80 (e.g., upstream side or in the bore 32 of the body 12) of the first seat 38 may be higher than a pressure on a second side (e.g., downstream side or within the cavity 47 of the ball valve 10) of the first seat 38, which causes the first seat 38 to maintain contact with the ball 16. For example, in certain embodiments, the fluid 36 exerts a force 62 on an axially-facing surface 60 (e.g., annular surface) of the first seat 38 and/or the fluid 36 travels through the injection channels 50, as shown by arrows 64, to exert a force 68 on an axially-facing surface 66 (e.g., annular surface) of the first seat 38 to drive the first seat 38 toward the ball 16. Additionally or alternatively, a biasing force 82 (e.g., spring force) exerted on the first seat 38, such as by a biasing member 84 (e.g., spring) positioned between opposed axially-facing surfaces of the body 12 and the first seat 38, may drive the first seat 38 toward the ball 16.

In some embodiments, the first seat 38 may include a passageway 94 that enables fluid flow from the cavity 47 to a space 96 (e.g., annular space) between the body 12 and the first seat 38 and that is configured to reduce incidence of hydraulic lock. One or more passageways 94 may be provided at discrete locations circumferentially about the first seat 38 and may extend along the axial axis 52. As shown, the body 12 includes a shoulder 98 (e.g., an annular axially-facing surface) that is configured to block and/or to limit axial movement of the first seat 38 relative to the body 12, which in turn may protect the biasing member 84.

In certain circumstances, a large differential pressure (e.g., more than 30, 50, 70, or 100 megapascals (MPa) and/or more than 10, 20, 30, 40, or 50 percent) may exist across the ball valve 10 when the ball valve 10 is in the closed position 58. Without the disclosed embodiments, while rotating the ball valve 10 from the closed position 58 toward the open position 24, flow of the fluid 36 through the ball valve 10 may cause a high localized force at the interface between the first seat 38 and the ball 16 and/or cause the first seat 38 to be pushed into a slightly cocked or tilted position within the bore 30 of the ball 16, thereby potentially damaging these components and/or increasing torque requirements for opening the ball valve 10. Similarly, while rotating the ball valve 10 from the open position 24 to the closed position 58, a high localized force may exist at the interface between the first seat 38 and the ball 16. Advantageously, the disclosed systems and methods are configured to drive the first seat 38 away from the ball 16 as the ball 16 moves through a portion of its path between the closed position 58 and the open position 24 (e.g., over a portion of an opening stroke and/or a closing stroke). For example, the disclosed systems and methods may be configured to flow fluid into the space 44, which is sealed by multiple annular seals 90, such that the fluid exerts a force 92 on the first seat 38 (e.g., an axially-facing surface 86) that drives the first seat 38 away from the ball 16.

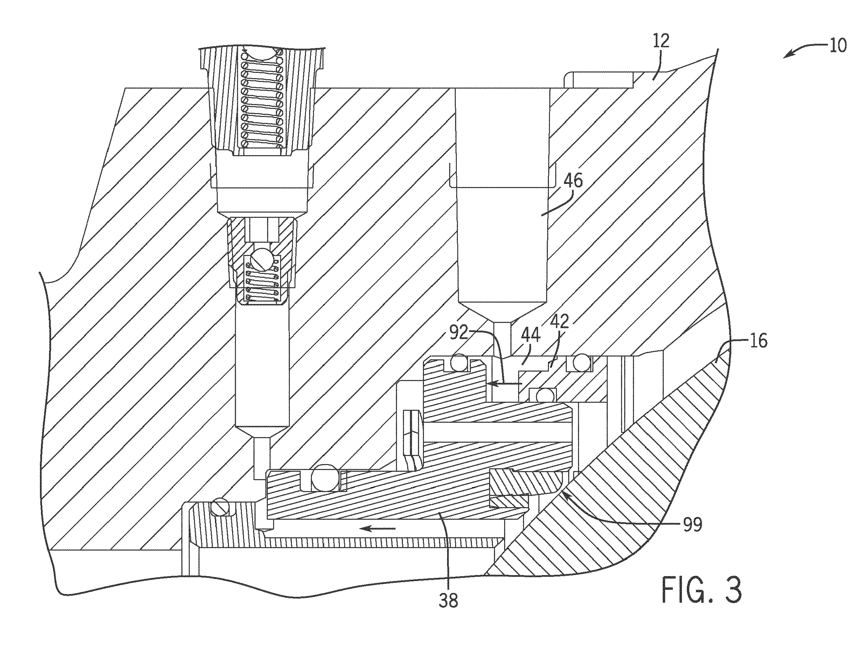

In some embodiments, the system is configured to flow fluid into the space 44 at a pressure such that the force 92 exerted on the first seat 38 reduces the contact force (e.g., by greater than approximately 20, 30, 40, 50, 60, 70, 80, or 90 percent) between the first seat 38 and the ball 16 without separating the first seat 38 from the ball 16 (e.g., a portion of the first seat 38 remains in contact with the ball 16) as the ball 16 moves through a portion of its path between the closed position 58 and the open position 24. In some embodiments, the system is configured to flow fluid into the space 44 at a pressure such that the force 92 exerted on the first seat 38 separates the first seat 38 from the ball 16 as the ball 16 moves through a portion of its path between the closed position 58 and the open position 24. For example, FIG. 3 is a cross-sectional side view of the portion of the ball valve 10 of FIG. 2 with the first seat 38 separated from the ball 16 by a gap 99 (e.g., annular gap).

As discussed in more detail below, in certain embodiments, the system is configured to flow fluid into the space 44 at a first pressure as the ball 16 rotates through a first portion of the path from the closed position 58 toward the open position 24 (e.g., a first portion of the opening stroke, such as between approximately 0 to 30, 0 to 25, 0 to 20, 0 to 15, 0 to 10, 0 to 5, 5 to 30, 5 to 25, 5 to 20, or 5 to 15 degrees, or through at least or approximately 5, 10, 15, 20, 25, or 30 degrees at or near the beginning of the opening stroke). The system may be configured to flow fluid into the space 44 at a second pressure, different from the first pressure, as the ball 16 rotates through a second portion of the path from the closed position 58 to the open position 24 (e.g., a second portion of the opening stroke, such as between approximately 5 to 90, 5 to 85, 10 to 90, 10 to 85, 15 to 90, 15 to 85, 20 to 90, 20 to 85, 25 to 90, 25 to 85, 30 to 90, or 30 to 85 degrees, or through at least or approximately 40, 50, 60, 70, 80, or 85 degrees in the middle of or near or at the end of the opening stroke). In some such embodiments, the first pressure is less than the second pressure, such as at least or approximately 10, 20, 30, 40, 50, 60, 70, or 80 percent less than the second pressure. In some embodiments, the first pressure may be configured to cause a reduction in the contact force between the first seat 38 and the ball 16 without separating the first seat 38 from the ball 16, while the second pressure may be configured to cause a further reduction in the contact force between the first seat 38 and the ball 16 and/or cause the first seat 38 to separate from the ball 16. For example, in some embodiments, the fluid may be provided to the space 44 at the first pressure to reduce the contact force as the ball 16 rotates from approximately 0 to 15 degrees, and the fluid may be provided to the space 44 at the second pressure to separate the first seat 38 from the ball 16 as the ball rotates from approximately 15 to 90 degrees.

In certain embodiments, fluid may be vented from the space 44 (e.g., the space 44 may be depressurized) while the ball 16 is in the closed position 58, the open position 24, and/or during the closing stroke, thereby enabling the first seat 38 to seal against the ball 16. In some embodiments, fluid may be provided to the space 44 (e.g., at a third pressure, the first pressure, or the second pressure) as the ball 16 rotates through a portion of the path from the open position 24 to the closed position 58 (e.g., a portion of the closing stroke, such as between approximately 15 to 0, 10 to 0, 5 to 0, or 3 to 0 degrees or through at least or approximately 1, 2, 3, 4, 5, 10, 15, 20 or 25 degrees at or near the end of the closing stroke).

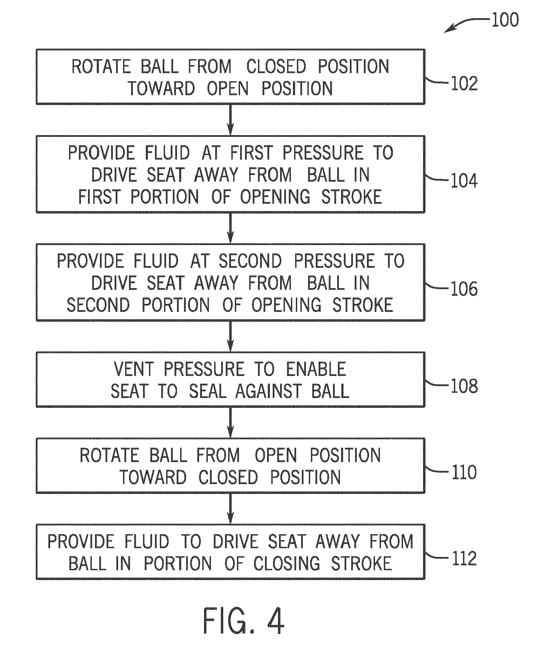

FIG. 4 is a flow diagram of an embodiment of a method 100 for adjusting the first seat 38 of the ball valve 10. The method 100 includes various steps represented by blocks. Although the flow chart illustrates the steps in a certain sequence, it should be understood that the steps may be performed in any suitable order and certain steps may be carried out simultaneously, where appropriate. Further, certain steps or portions of the method 100 may be omitted and other steps may be added. As discussed in more detail below, the method 100 may be performed by a system, such as a hydraulic, pneumatic, or electronic control system, which may include one of more valves, fluid sources, conduits, and/or a controller (e.g., electronic controller having a processor, memory, and instructions). Furthermore, steps or portions of the method 100 may be performed by separate devices or systems.

As shown, in step 102, an actuator drives the stem 20 to rotate the ball 16 from the closed position 58 toward the open position 24 (e.g., the opening stroke). In step 104, while the ball 16 is in the first portion of the opening stroke (e.g., between approximately 0 to 30, 0 to 25, 0 to 20, 0 to 15, 0 to 10, 0 to 5, 5 to 30, 5 to 25, 5 to 20, or 5 to 15 degrees, or through at least or approximately 5, 10, 15, 20, 25, or 30 degrees at or near the beginning of the opening stroke, or through approximately 5 to 25, 10 to 20, or 5 to 15 degrees of the opening stroke), fluid is provided to the space 44. In some embodiments, the fluid is provided to the space 44 at a first pressure, which may be configured to reduce or eliminate the contact force between the first seat 38 and the ball 16. In step 106, while the ball 16 is in the second portion of the opening stroke (e.g., between approximately 5 to 90, 5 to 85, 10 to 90, 10 to 85, 15 to 90, 15 to 85, 20 to 90, 20 to 85, 25 to 90, 25 to 85, 30 to 90, or 30 to 85 degrees, or through at least or approximately 40, 50, 60, 70, 80, or 85 degrees in the middle of or near or at the end of the opening stroke), fluid is provided to the space 44. In some embodiments, the fluid is provided to the space 44 at a second pressure different from the first pressure. In some embodiments, the second pressure is greater than the first pressure and is configured to further reduce the contact pressure and/or to separate or further separate the first seat 38 from the ball 16, as discussed above.

In step 108, when the ball 16 reaches a predetermined position (e.g., the open position 24), fluid flow to the space 44 is blocked and/or the space 44 is vented (e.g., depressurized), thereby enabling the first seat 38 to seal against the ball 16. In step 110, the ball 16 may rotate from the open position 24 toward the closed position 58 (e.g., the closing stroke), such as via a spring return actuator. In some embodiments, the space 44 may remain vented as the ball 16 rotates through a first portion of the closing stroke (e.g., between approximately 90 to 15, 90 to 10, 90 to 5, or 90 to 3 degrees, or through at least or approximately 50, 60, 70, 80, 85 degrees at or near the beginning of the closing stroke). In step 112, while the ball 16 is in a second portion of the closing stroke (e.g., between approximately 15 to 0, 10 to 0, 5 to 0, or 3 to 0 degrees, or through at least or approximately 1, 2, 3, 4, 5, 10, 15, 20 or 25 degrees at or near the end of the closing stroke, or through approximately 1 to 15, 2 to 10, or 3 to 5 degrees of the closing stroke), fluid is provided to the space 44 (e.g., at a third pressure, the first pressure, or the second pressure) to reduce the contact pressure and/or to separate the first seat 38 from the ball 16. However, in some embodiments, the space 44 may remain vented as the ball 16 rotates through the entirety of the closing stroke (e.g., as the ball 16 rotates from the open position 24 to the closed position 58). It should be understood that in some embodiments, multiple different pressures may be applied to the space 44 during different portions of the closing stroke.

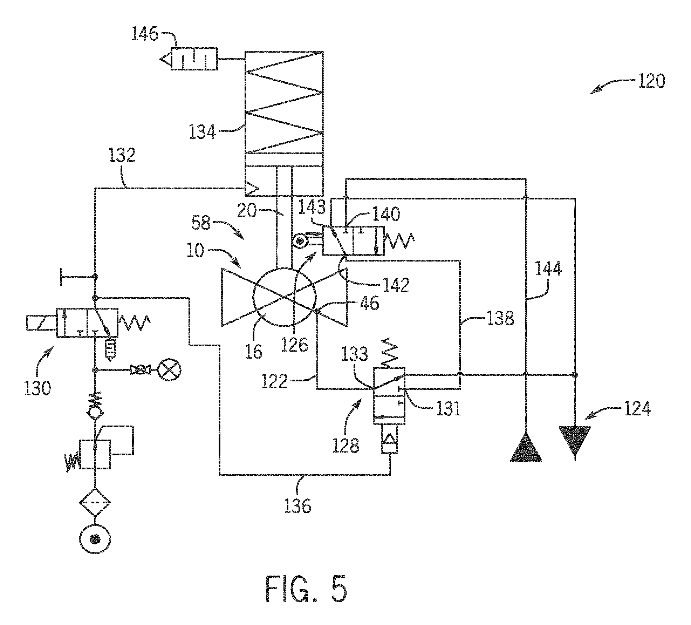

With the foregoing in mind, FIGS. 5-13 illustrate schematic diagrams of various systems that may be configured to adjust the first seat 38 of the ball valve 10, such as by carrying out some or all of the steps of the method 100 of FIG. 4. FIG. 5 is a schematic diagram of a system 120 (e.g., hydraulic system) that is configured to adjust a position of the first seat 38 of the ball valve 10. As shown, the system 120 is fluidly coupled to the opening 46 of the ball valve 10 via a conduit 122, and the system 120 includes a fluid source 124 (e.g., hydraulic fluid source), a cam-operated valve 126, a valve 128 (e.g., pilot valve), and a valve 130 (e.g., solenoid valve).

The cam-operated valve 126 and the valve 128 adjust fluid flow from the fluid source 124 to the opening 46. For example, in the illustrated embodiment, the valve 128 may fluidly couple a first port 131 to a second port 133 to enable fluid flow through the valve 128 toward the opening 46 during the opening stroke, and the valve 128 may vent the opening 46 while the ball 16 is in the closed position 58, the open position 24, and/or during the closing stroke. The cam-operated valve 126 may fluidly couple a first port 140 to a second port 142 to enable fluid flow through the cam-operated valve 126 toward the opening 46 during a portion of the rotational path of the ball 16 (e.g., between approximately 5 to 90, 5 to 85, 15 to 90, or 15 to 85 degrees, or through at least or approximately 5, 10, 15, 20, 25, 30, 40, 50, 60, 70, or 80 degrees). Thus, together these valves 126, 128 enable fluid to flow to the opening 46 as the ball rotates through the portion of its rotational path during the opening stroke. In some embodiments, the cam-operated valve 126 may fluidly couple the second port 142 to a third port 143 during other portions of the rotational path of the ball 16 (e.g., between approximately 0 to 5, 0 to 15, or 85 to 90 degrees), thereby blocking fluid flow toward the opening 46 during the other portions of the opening stroke.

With the foregoing in mind, the illustrated embodiment depicts the system 120 while the ball 16 is in the closed position 58. As shown, while the ball valve 10 is in the closed position 58, the opening 46 is vented through the valve 128. Thus, the first seat 38 is in contact with the ball 16 while the ball valve 10 is in the closed position 58, as discussed above with respect to FIG. 2. In operation, actuation of the valve 130 provides a fluid flow (e.g., from a pneumatic fluid source) through a conduit 132 to adjust an actuator 134 that drives the stem 20 to rotate the ball 16 from the closed position 58 toward the open position 24. Actuation of the valve 130 also provides a fluid flow through a conduit 136 to adjust the valve 128 to a position in which the valve 128 fluidly couples the first port 131 to the second port 133.

In the illustrated embodiment, rotation of the stem 20 (e.g., in response to actuation of the valve 130) controls the cam-operated valve 126. During the portion of the opening stroke, the cam-operated valve 126 is adjusted to a position in which the first port 140 is fluidly coupled to the second port 142. Thus, during the portion of the opening stroke, the cam-operated valve 126 enables fluid to flow from the fluid source 124, through a conduit 144, through the cam-operated valve 126 (e.g., across ports 140, 142), through a conduit 138, through the valve 128, and through the conduit 122 to the opening 46. In some embodiments, the fluid may be provided to the opening 46 at a pressure that reduces the contact force between the first seat 38 and the ball 16 without separating the first seat 38 from the ball 16. In some embodiments, the fluid may be provided to the opening 46 at a pressure that causes the first seat 38 to separate from the ball 16 (e.g., creating an intermediate gap or clearance). Thus, the system 120 may be configured to drive the first seat 38 away from the ball 16 during the portion of the opening stroke.

As noted above, the cam-operated valve 126 may fluidly couple the second port 142 to the third port 143 during other portions of the rotational path of the ball 16, thereby blocking fluid flow toward the opening 46 during the other portions of the opening stroke and/or when the ball reaches a predetermined position (e.g., the open position 24) during the opening stroke. In certain embodiments, the ball 16 is driven from the open position 24 to the closed position 58 via a spring return actuator 146. In some such embodiments, the valve 130 may be turned off to enable the spring return actuator 146 to drive the ball 16 toward the closed position 58. Additionally, when the valve 130 is turned off, the valve 128 may resume the illustrated position in which the opening 46 is vented through the valve 128. In some embodiments, the opening 46 may remain vented through the valve 128 in this manner during the closing stroke.

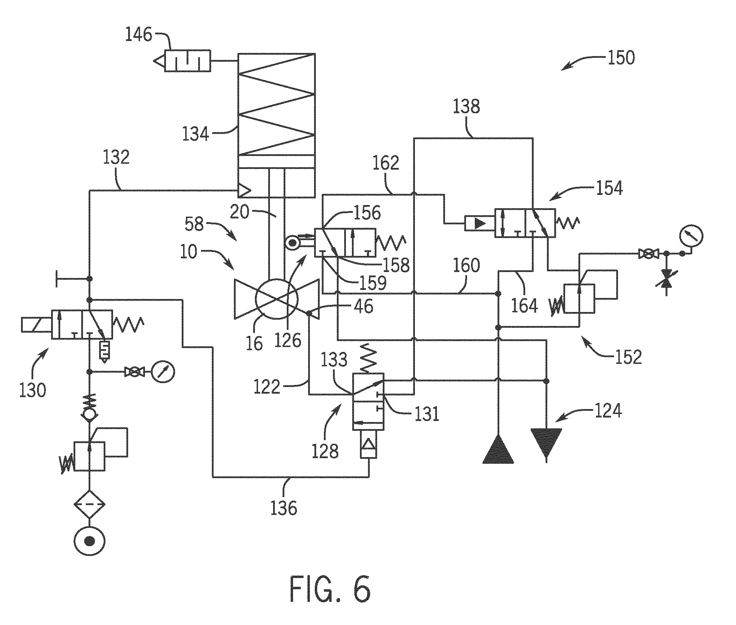

FIG. 6 is a schematic diagram of another system 150 (e.g., hydraulic system) that is configured to adjust a position of the first seat 38 of the ball valve 10. The system 150 of FIG. 6 includes certain features of the system 120 of FIG. 5. For example, the system 150 includes the conduit 122 that fluidly couples the system 150 to the opening 46 of the ball valve 10, the fluid source 124, the cam-operated valve 126, the valve 128, and the valve 130. The system 150 also includes a pressure regulator 152 and a valve 154 (e.g., diverter valve).

In the system 150, the valve 128 may fluidly couple the first port 131 to the second port 133 to enable fluid flow through the valve 128 toward the opening 46 during the opening stroke, and the valve 128 may vent the opening 46 while the ball 16 is in the closed position 58, the open position 24, and/or during the closing stroke. The cam-operated valve 126 may fluidly couple a first port 156 to a second port 158 during a portion of the rotational path of the ball 16 (e.g., a first portion, such as between approximately 0 to 30, 0 to 25, 0 to 20, 0 to 15, 0 to 10, 0 to 5, 5 to 30, 5 to 25, 5 to 20, or 5 to 15 degrees, or through at least approximately 5, 10, 15, 20, 25, or 30 degrees). Thus, the cam-operated valve 126 may fluidly couple the first port 156 to the second port 158 during the portion of the opening stroke. In some embodiments, the cam-operated valve 126 may fluidly couple the first port 156 to a third port 159 during other portion(s) of the rotational path of the ball 16 (e.g., a second portion of the opening stroke, such as between approximately 5 to 90, 5 to 85, 10 to 90, 10 to 85, 15 to 90, 15 to 85, 20 to 90, 20 to 85, 25 to 90, 25 to 85, 30 to 90, or 30 to 85 degrees, or through at least approximately 40, 50, 60, 70, 80, or 85 degrees. Thus, the cam-operated valve 126 may fluidly couple the first port 156 to a third port 159 during the other portion(s) of the opening stroke. Together, the valves 126, 128, 154 may enable fluid to flow at one pressure (e.g., the first pressure) to the opening 46 during the portion of the opening stroke, enable fluid to flow at another pressure (e.g., the second pressure) to the opening 46 during the other portion(s) of the opening stroke, and/or vent the opening 46 while the ball 16 is in the closed position 58, the open position 24, and/or during the closing stroke.

With the foregoing in mind, the illustrated embodiment depicts the system 150 while the ball 16 is in the closed position 58. As shown, while the ball 16 is in the closed position 58, the opening 46 is vented through the valve 128. Thus, the first seat 38 is in contact with the ball 16 while the ball 16 is in the closed position 58, as discussed above with respect to FIG. 2. In operation, actuation of the valve 130 provides a fluid flow (e.g., from a pneumatic fluid source) through the conduit 132 to adjust the actuator 134 that drives the stem 20 to rotate the ball 16 from the closed position 58 toward the open position 24. Actuation of the valve 130 also provides a fluid flow through the conduit 136 to adjust the valve 128 to a position in which the valve 128 fluidly couples the first port 131 to the second port 133. Thus, during the opening stroke, the valve 128 fluidly couples the first port 131 to the second port 133, and enables fluid flow from the fluid source 124, through the pressure regulator 152, through the valve 154, through a conduit 138, through the valve 128, and through the conduit 122 to the opening 46 at a first pressure set or regulated by the pressure regulator 152.

In the illustrated embodiment, rotation of the stem 20 (e.g., in response to actuation of the valve 130) controls the cam-operated valve 126. During the portion of the opening stroke, the cam-operated valve 126 fluidly couples the first port 156 to the second port 158. During the other portions of the opening stroke, the cam-operated valve 126 fluidly couples the first port 156 to the third port 159, thereby enabling fluid flow from the fluid source 124, through a conduit 160, through the cam-operated valve 126 (e.g., across ports 156, 159), and through a conduit 162 to adjust a position of the valve 154, which in turn enables fluid to flow from the fluid source 124, through a conduit 164, through the valve 154, through the conduit 138, through the valve 128, and through the conduit 122 to the opening 46 at a second pressure. Thus, the system 150 may be configured to provide the fluid at the first pressure to the opening 46 over the portion of the opening stroke and/or to provide the fluid at the second pressure to the opening over other portion(s) of the opening stroke.

As discussed above, in some such embodiments, the first pressure is less than the second pressure, such as at least or approximately 10, 20, 30, 40, 50, 60, 70, or 80 percent less than the second pressure. In some embodiments, the first pressure may be configured to cause a reduction in the contact force between the first seat 38 and the ball 16 without separating the first seat 38 from the ball 16, while the second pressure may be configured to cause a further reduction in the contact force between the first seat 38 and the ball 16 and/or cause the first seat 38 to separate from the ball 16. Thus, the system 150 may be configured to supply fluid at various pressures to the opening 46 to drive the first seat 38 away from the ball 16 during certain portions of the opening stroke.

In certain embodiments, the ball 16 is driven from the open position 24 to the closed position 58 via the spring return actuator 146. In some such embodiments, the valve 130 may be turned off to enable the spring return actuator 146 to drive the ball 16 toward the closed position 58. Additionally, when the valve 130 is turned off, the valve 128 may resume the illustrated position in which the opening 46 is vented through the valve 128. In some embodiments, the opening 46 may remain vented through the valve 128 in this manner during the closing stroke.

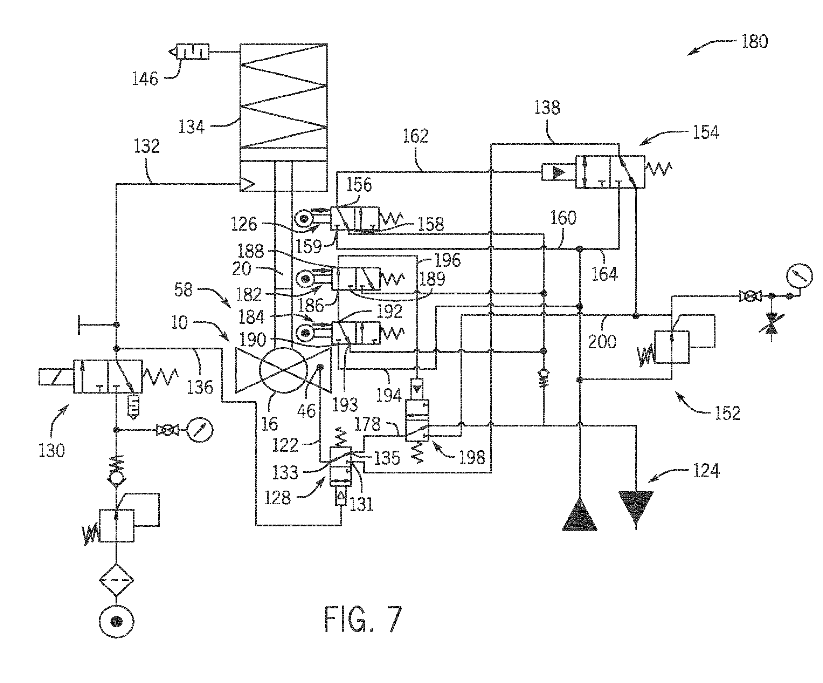

FIG. 7 is a schematic diagram of another system 180 (e.g., hydraulic system) that is configured to adjust a position of the first seat 38 of the ball valve 10. The system 180 of FIG. 7 includes certain features of the system 120 of FIG. 5 and the system 150 of FIG. 6. For example, the system 180 includes the conduit 122 that fluidly couples the system 180 to the opening 46 of the ball valve 10, the fluid source 124, the cam-operated valve 126, the valve 128, the valve 130, the pressure regulator 152, and the valve 154. As shown, the system 180 may include a second cam-operated valve 182, a third cam-operated valve 184, and a valve 198. The system 180 may be configured to adjust the first seat 38 during the opening stroke in the manner set forth above with respect to FIG. 5. As discussed in more detail below, the system 180 may be configured to provide fluid to the opening 46 to adjust the first seat 38 during the closing stroke.

Similar to the system 150 of FIG. 5, in the system 180, the valve 128 may fluidly couple the first port 131 to the second port 133 to enable fluid flow through the valve 128 toward the opening 46 during the opening stroke. The valve 128 may fluidly couple the second port 133 to a third port 135 while the ball 16 is in the closed position 58, the open position 24, and/or during the closing stroke. The cam-operated valve 126 may fluidly couple the first port 156 to the second port 158 during the portion of the opening stroke (e.g., a first portion, such as between approximately 0 to 30, 0 to 25, 0 to 20, 0 to 15, 0 to 10, 0 to 5, 5 to 30, 5 to 25, 5 to 20, or 5 to 15 degrees, or through at least or approximately 5, 10, 15, 20, 25, or 30 degrees near or at the beginning of the opening stroke). In some embodiments, the cam-operated valve 126 may fluidly couple the first port 156 to the third port 159 during other portion(s) of the opening stroke (e.g., a second portion of the opening stroke, such as between approximately 5 to 90, 5 to 85, 10 to 90, 10 to 85, 15 to 90, 15 to 85, 20 to 90, 20 to 85, 25 to 90, 25 to 85, 30 to 90, or 30 to 85 degrees, or through at least or approximately 40, 50, 60, 70, 80, or 85 degrees in the middle of or near or at the end of the opening stroke).

As shown, the system 180 includes the second cam-operated valve 182 and the third cam-operated valve 184, which may be configured to affect fluid flow to the opening 46 during the closing stroke. In particular, the second cam-operated valve 182 may fluidly couple a first port 186 to a second port 188 during a respective portion of the path of the ball 16 (e.g., between approximately 0 to 3, 0 to 5, 0 to 10, or 0 to 15 degrees, or through at least or approximately 1, 2, 3, 4, 5, 10, or 15 degrees). In some embodiments, the second cam-operated valve 182 may fluidly couple the second port 188 to a third port 189 during other respective portion(s) of the path (e.g., between approximately 3 to 90, 5 to 90, 10 to 90, or 15 to 90 degrees, or through at least or approximately 85, 80, or 75 degrees). In some embodiments, the third cam-operated valve 184 may fluidly couple a first port 190 to a second port 192 during the entirety of the path of the ball 16 or over a respective portion of the path of the ball 16 (e.g., between approximately 0 to 3, 0 to 5, 0 to 10, or 0 to 15 degrees, or through at least or approximately 1, 2, 3, 4, 5, 10, or 15 degrees). In some embodiments, the third cam-operated valve 184 may fluidly couple the second port 192 to a third port 193 while the ball 16 is in the closed position 58 or during other respective portion(s) of the path (e.g., between approximately 3 to 90, 5 to 90, 10 to 90, or 15 to 90 degrees, or through at least or approximately 85, 80, or 75 degrees). The respective portions of the path of the ball 16 through which the second cam-operated valve 182 fluidly couples the first port 186 to the second port 188 and the third cam-operated valve 184 fluidly couples the first port 190 to the second port 192 overlap to enable fluid flow through both valves 182, 184 during a corresponding portion of the path of the ball 16. Together, the valves 126, 128, 154, 182, 184, 198 may enable fluid to flow at one pressure (e.g., the first pressure) to the opening 46 during the portion of the opening stroke, enable fluid to flow at another pressure (e.g., the second pressure) to the opening 46 during the other portion(s) of the opening stroke, enable fluid to flow (e.g., at a third pressure, the first pressure, or the second pressure) to the opening 46 during a portion of the closing stroke, and/or vent the opening 46 while the ball 16 is in the closed position 58, the open position 24, and/or during other portion(s) of the closing stroke.

With the foregoing in mind, the illustrated embodiment depicts the system 180 while the ball 16 is in the closed position 58. As shown, while the ball 16 is in the closed position 58, the opening 46 is vented through the valve 128 and the valve 198. Thus, the first seat 38 is in contact with the ball 16 while the ball valve 10 is in the closed position 58, as discussed above with respect to FIG. 2. Similar to the system 150 of FIG. 6, actuation of the valve 130 provides a fluid flow (e.g., from a pneumatic fluid source) through the conduit 132 to adjust the actuator 134 that drives the stem 20 to rotate the ball 16 from the closed position 58 toward the open position 24. Actuation of the valve 130 also provides a fluid flow through the conduit 136 to adjust the valve 128 to a position in which the valve 128 fluidly couples the first port 131 to the second port 133. Thus, during the opening stroke, the valve 128 fluidly couples the first port 131 to the second port 133, and enables fluid flow from the fluid source 124, through the valve 154, through the conduit 138, through the valve 128, and through the conduit 122 to the opening 46. While the valve 154 is in the illustrated position during the opening stroke, the fluid flows through the pressure regulator 152 and is provided to the opening 46 at one pressure (e.g., the first pressure) set or regulated by the pressure regulator 152.

In the illustrated embodiment, rotation of the stem 20 (e.g., in response to actuation of the valve 130) controls the cam-operated valve 126. Similar to the system 150 of FIG. 5, during the portion of the opening stroke, the cam-operated valve 126 fluidly couples the first port 156 to the second port 158. During the other portions of the opening stroke, the cam-operated valve 126 fluidly couples the first port 156 to the third port 159, thereby enabling fluid flow from the fluid source 124, through a conduit 160, through the cam-operated valve 126 (e.g., across ports 156, 159), and through a conduit 162 to adjust a position of the valve 154, which in turn enables fluid to flow from the fluid source 124, through a conduit 164, through the valve 154, through the conduit 138, through the valve 128, and through the conduit 122 to the opening 46 at a second pressure. Thus, the system 180 may be configured to provide the fluid at the first pressure to the opening 46 over the portion of the opening stroke and/or to provide the fluid at the second pressure to the opening over other portion(s) of the opening stroke.

In certain embodiments, the ball 16 is driven from the open position 24 to the closed position 58 via the spring return actuator 146. In some such embodiments, the valve 130 may be turned off to enable the spring return actuator 146 to drive the ball 16 toward the closed position 58. Additionally, when the valve 130 is turned off, the valve 128 may resume the illustrated position. Thus, the valve 128 may be in the illustrated position while the ball 16 is in the closed position and/or during the entirety of the closing stroke. Additionally, the valve 198 may be in the illustrated position to enable venting the opening 46 while the ball 16 is in the closed position 58 and over at least some of the closing stroke. As discussed in more detail below, when the valve 128 is in the illustrated position, the second cam-operated valve 182, the third cam-operated valve 184, and the valve 198 may affect fluid flow to the opening 46 and may cause adjustment of the first seat 38 during the closing stroke.

In some embodiments, the third cam-operated valve 184 fluidly couples the first port 190 to the second port 192 over the entirety of the closing stroke or over a portion of the closing stroke. During a respective portion of the closing stroke, the second cam-operated valve 182 may be adjusted to a position in which the first port 186 is fluidly coupled to the second port 188. When the second cam-operated valve 182 and the third cam-operated valve 184 are in such positions, fluid may flow from the fluid source 124, through a conduit 194, through the third cam-operated valve 184 (e.g., across ports 190, 192), through the second cam-operated valve 186 (e.g., across ports 186, 188), through a conduit 196 to adjust a position of the valve 198, which in turn enables fluid to flow from the pressure regulator 152, through a conduit 200, through the valve 198, through the conduit 178, through the valve 128, and through the conduit 122 to the opening 46. In some such embodiments, the pressure regulator 152 may be configured to provide fluid at a pressure (e.g., the first pressure) that reduces the contact force between the first seat 38 and the ball 16 without separating these components from one another or at a pressure (e.g., the second pressure) that further reduces the contact force and/or causes separation of the first seat 38 from the ball 16 as the ball valve 16 moves to the closed position 58. In some embodiments, the fluid may be provided to the opening 46 during the closing stroke at a third pressure different from both the first or second pressures applied during the opening stroke. Thus, in some embodiments, when the ball 16 rotates through a portion of its path or reaches a predetermined position (e.g., 2, 3, 4, 5, 10, or 15 degrees) during the closing stroke, fluid may drive the first seat 38 away from the ball 16, thereby reducing torque needed to close the ball valve 10 and/or reducing wear on the components, for example.

As noted above, the second-cam operated valve 182 may be configured to fluidly couple the first port 186 to the second port 188 while the ball 16 is positioned between approximately 0 to 3, 0 to 5, 0 to 10, or 0 to 15 degrees, or through at least or approximately 1, 2, 3, 4, 5, 10, or 15 degrees at or near the end of the closing stroke. Furthermore, the third cam-operated valve 184 may be configured to fluidly couple the first port 190 to the second port 192 during the entirety of the closing stroke or while the ball 16 is positioned between approximately 0 to 90, 5 to 90, 10 to 90, or 15 to 90 degrees, or through at least or approximately 1, 2, 3, 4, 5, 10, or 15 degrees at or near the end of the closing stroke. As noted above, the respective portions of the path of the ball 16 through which the second cam-operated valve 182 fluidly couples the first port 186 to the second port 188 and the third cam-operated valve 184 fluidly couples the first port 190 to the second port 192 overlap to enable fluid flow through both valves 182, 184, as well as fluid flow to the opening 46, during the corresponding portion of the closing stroke

By way of specific example to facilitate discussion, the cam-operated valve 126 may fluidly couple the first port 156 to the third port 159 while the ball 16 is positioned between approximately 5 and 90 degrees. Thus, upon initial actuation of the valve 130 and until the ball 16 reaches approximately 5 degrees, fluid flows from the fluid source 124 to the opening 46 at the first pressure regulated by the pressure regulator 152. When the ball 16 is rotated to approximately 5 degrees, the cam-operated valve 126 and the diverter valve 154 adjust, thereby causing fluid to flow from the fluid source 124 at the second pressure. The fluid may be provided to the opening 46 at the second pressure until the valve 130 is turned off, as this causes the valve 128 to block flow from the conduit 138 and instead to fluidly couple the second port 133 to the third port 135. The opening 46 may be vented through the valves 128 and 198 while the ball 16 is in the open position 24. During the closing stroke, the third cam-operated valve 84 may fluidly couple the first port 190 to the second port 192. When the ball 16 is rotated to approximately 3 degrees, the second cam-operated valve 82 may be adjusted to fluidly couple the first port 186 to the second port 188, thereby enabling fluid to flow through both valves 182, 184 and causing the valve 198 to adjust, which in turn provides fluid from the fluid source 124 to the opening 46 at a pressure (e.g., the first pressure or other set pressure) regulated by the pressure regulator 152. When the ball 16 reaches the closed position 58, the third cam-operated valve 184 may adjust to fluidly couple the second port 192 to the third port 192, thereby enabling venting of the opening 46. Thus, the system 180 may be configured to supply fluid at various pressures to the opening 46 to drive the first seat 38 away from the ball 16 during certain portions of the opening stroke and/or certain portions (e.g., at the end) of the closing stroke.

The numerical values provided in this example and throughout the disclosure are intended to be exemplary, and it should be understood that the cam-operated valves 126, 184, 186 may be adjusted at various stages of the opening and/or closing strokes. Furthermore, to the extent that adjustment of the cam-operated valves 126, 182, 184 is discussed in the context of the opening and closing strokes, it should be understood that the cam-operated valves 126, 182, 184 may be adjusted based on the position of the ball 16 regardless of whether the ball 16 is being rotated toward the open position 24 or the closed position 58, but that the effect of the cam-operated valve 126, 182, 184 on the first seat 38 is enabled or blocked based on the position of the valve 128. In certain embodiments, additional cam-operated valves may be provided to provide various pressures (e.g., more than 3, 4, or 5 different pressures) through the opening and/or closing strokes. Additionally, to the extent that certain examples refer to moving from a fully open position to a fully closed position, or from a fully closed position to a fully open position, it should be understood that the embodiments disclosed herein may be adapted to apply pressure to the space 44 as the ball 10 rotates between intermediate positions, or between an intermediate position and a fully closed position or a fully open position, for example.

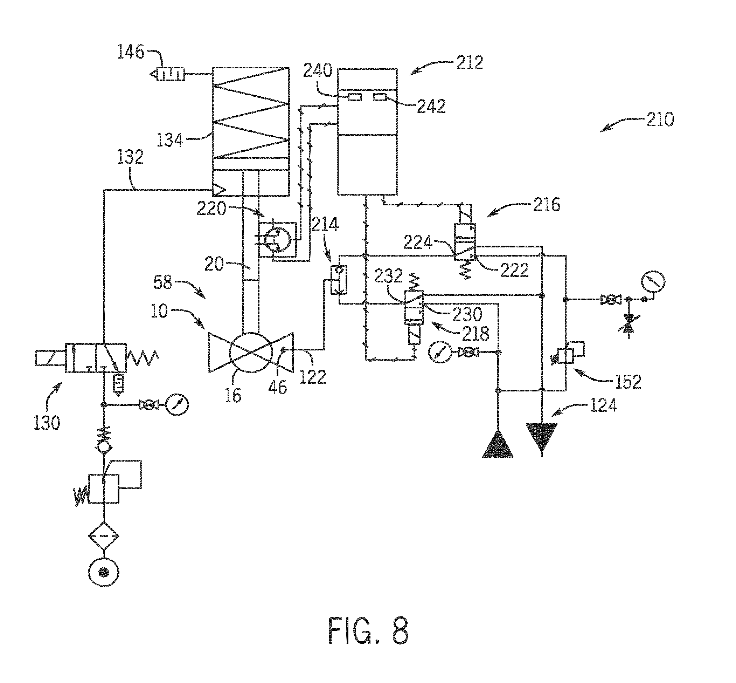

FIG. 8 is a schematic diagram of another system 210 (e.g., hydraulic system) having an electronic controller 212 that is configured to adjust a position of the first seat 38 of the ball valve 10. The system 210 of FIG. 8 includes certain features of the system 120 of FIG. 5, the system 150 of FIG. 6, and the system 180 of FIG. 7. For example, the system 210 includes the conduit 122 that fluidly couples the system 210 to the opening 46 of the ball valve 10, the fluid source 124, the valve 130, and the pressure regulator 152. The system 210 also includes a valve 214 (e.g., shuttle valve), a valve 216 (e.g., diverter valve), a valve 218, (e.g., diverter valve), and a sensor 220.

The illustrated embodiment depicts the system 210 while the ball valve 10 is in the closed position 58. As shown, while the ball valve 10 is in the closed position 58, the opening 46 is vented through the valves 214, 216, 218. Thus, the first seat 38 is in contact with the ball 16 while the ball 16 is in the closed position 58, as discussed above with respect to FIG. 2. In operation, actuation of the valve 130 provides a fluid flow (e.g., from a pneumatic fluid source) through the conduit 132 to adjust the actuator 134 that drives the stem 20 to rotate the ball 16 from the closed position 58 toward the open position 24.

The sensor 220 may monitor a position of the stem 20 and provide a signal indicative of the position of the ball 16 to the controller 212. The controller 212 may control the valves 214, 216, 218 to adjust fluid flow to the opening 46 based on the signal. For example, during a first portion of the opening stroke (e.g., such as between approximately 0 to 30, 0 to 25, 0 to 20, 0 to 15, 0 to 10, 0 to 5, 5 to 30, 5 to 25, 5 to 20, or 5 to 15 degrees, or through at least approximately 5, 10, 15, 20, 25, or 30 degrees near or at the beginning of the opening stroke), the controller 212 may control the valve 216 to fluidly couple a first port 222 to a second port 224. Thus, during the portion of the opening stroke, the valve 216 enables fluid flow from the fluid source 124, through the pressure regulator 152, through the valves 216, 214, and through the conduit 122 to the opening 46 at a pressure (e.g., the first pressure) set or regulated by the pressure regulator 152. During a second portion of the opening stroke (e.g., such as between approximately 5 to 90, 5 to 85, 10 to 90, 10 to 85, 15 to 90, 15 to 85, 20 to 90, 20 to 85, 25 to 90, 25 to 85, 30 to 90, or 30 to 85 degrees, or through at least approximately 40, 50, 60, 70, 80, or 85 degrees in the middle of or at the end of the opening stroke), the controller 212 may control the valve 218 to fluidly couple a first port 230 to a second port 232. Thus, during the second portion of the opening stroke, the valve 218 enables fluid flow from the fluid source 124, through the valves 218, 214, and through the conduit 122 to the opening 46 at another pressure (e.g., the second pressure). In some embodiments, the controller 212 may be configured to vent the space 44 when the ball valve 16 reaches the open position 24.

The controller 212 of the present embodiments includes a processor, such as the illustrated microprocessor 240, and a memory device 242. The controller 212 may also include one or more storage devices and/or other suitable components. The processor 240 may be used to execute instructions or software. Moreover, the processor 240 may include multiple microprocessors, one or more "general-purpose" microprocessors, one or more special-purpose microprocessors, and/or one or more application specific integrated circuits (ASICS), or some combination thereof. For example, the processor 240 may include one or more reduced instruction set (RISC) processors.

The memory device 242 may include a volatile memory, such as random access memory (RAM), and/or a nonvolatile memory, such as ROM. The memory device 242 may store a variety of information and may be used for various purposes. For example, the memory device 242 may store processor-executable instructions (e.g., firmware or software) for the processor 240 to execute, such as instructions for processing the signals from the sensor 220 to determine a position of the stem 20. The storage device(s) (e.g., nonvolatile storage) may include read-only memory (ROM), flash memory, a hard drive, or any other suitable optical, magnetic, or solid-state storage medium, or a combination thereof. The storage device(s) may store data (e.g., characteristics of the hydraulic fluid, thresholds, etc.), instructions (e.g., software or firmware for processing the signals, etc.), and any other suitable data. The controllers, processors, and memory devices disclosed herein may have any of the above-described features. Additionally, it should be understood that any of the systems 120, 150, 180 may be adapted to include the controller 212 to control one or more valves in accordance with the techniques of the present disclosure.

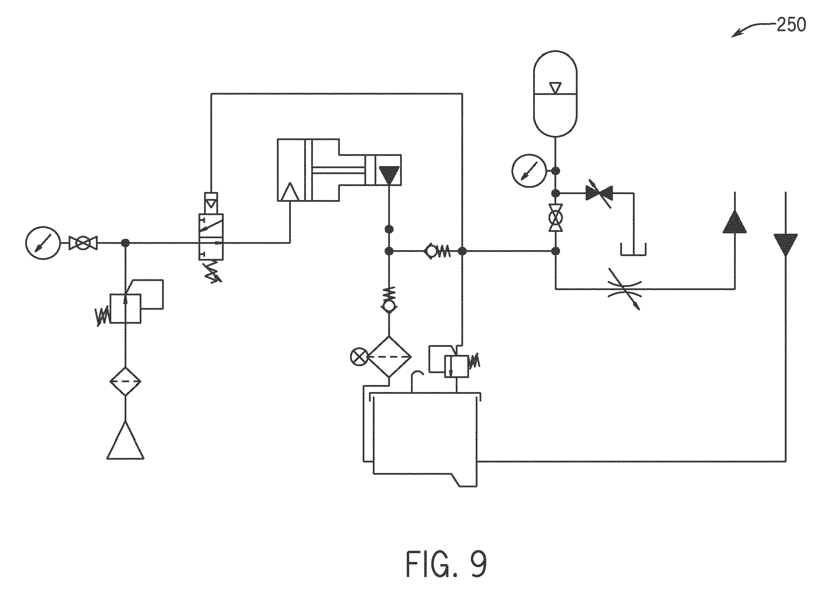

FIG. 9 is a schematic diagram of a hydraulic booster charger system 250 that may be used to supply hydraulic fluid to the hydraulic systems of FIGS. 5-8. The hydraulic booster charger system 250 may be part of the fluid source 124 and is configured to provide the fluid at a particular pressure to adjust the first seat 38 of the ball valve 10.

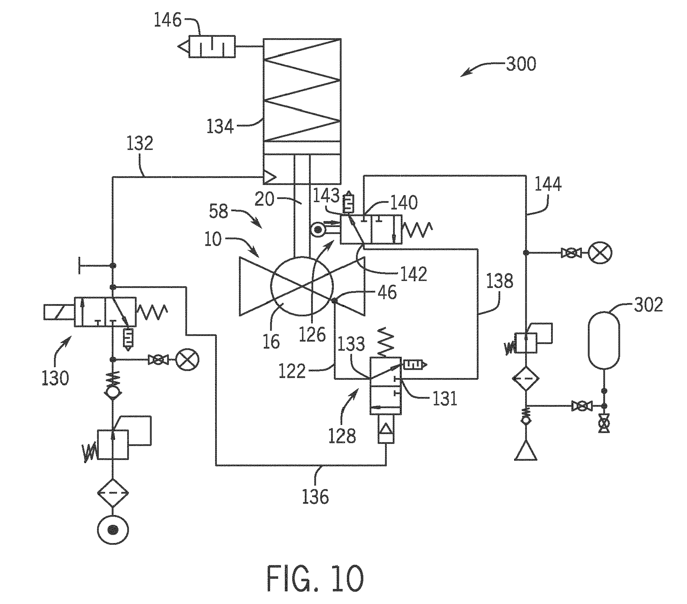

FIGS. 10-13 illustrate schematic diagrams of systems that utilize a pneumatic system to adjust the position of the first seat 38 of the ball valve 10. In particular, FIG. 10 is a schematic diagram of a system 300 (e.g., pneumatic system). The system 300 is configured to provide a fluid flow (e.g., pressurized gas) from a pneumatic header 302 to adjust the seat 38 in a similar manner as described above with respect to FIG. 5. For example, as shown, the system 300 includes the cam-actuated valve 126, the valve 128, the valve 130 that are configured to adjust the fluid flow to drive the first seat 38 away from the ball 16 during the portion of the opening stroke, and other components.

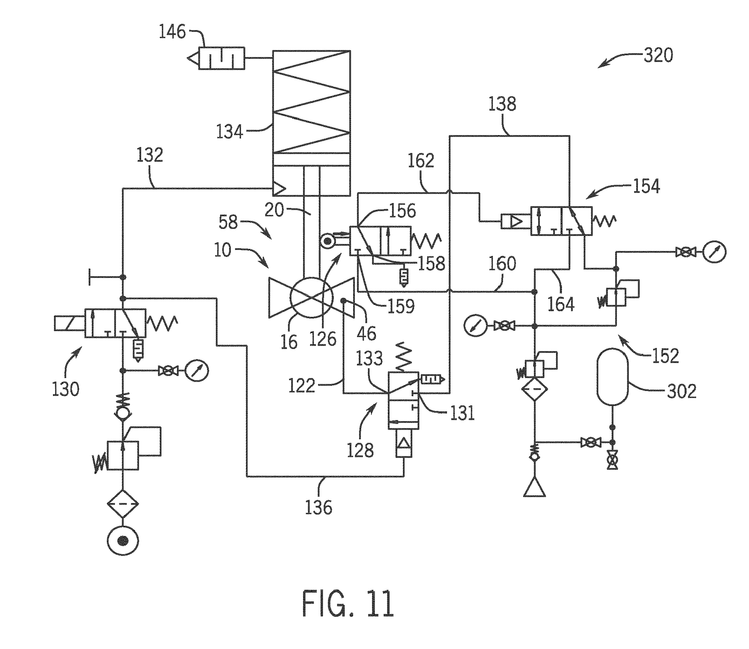

FIG. 11 is a schematic diagram of another system 320 (e.g., pneumatic system) that is configured to control a position of the first seat 38 of the ball valve 10. The system 320 is configured to provide a fluid flow (e.g., pressurized gas) from the pneumatic header 302 to adjust the seat 38 in a similar manner as described above with respect to FIG. 6. For example, as shown, the system 320 includes the cam-actuated valve 126, the valve 128, the valve 130, the valve 154, and the pressure regulator 152 that are configured to supply fluid to the opening 46 at various pressures to drive the first seat 38 away from the ball 16 during certain portions of the opening stroke, and other components.

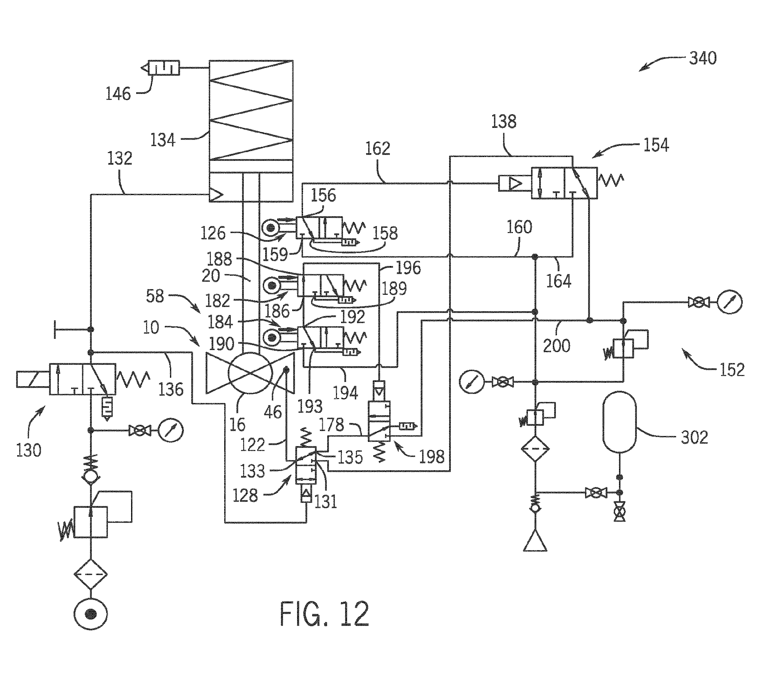

FIG. 12 is a schematic diagram of a system 340 (e.g., pneumatic system) that is configured to control a position of the first seat 38 of the ball valve 10. The system 340 is configured to provide a fluid flow (e.g., pressurized gas) from the pneumatic header 302 to adjust the seat 38 in a similar manner as described above with respect to FIG. 7. For example, as shown, the system 340 includes the cam-actuated valve 126, the second cam-actuated valve 182, the third cam-actuated valve 184, the valve 128, the valve 130, the valve 154, the valve 198, and the pressure regulator 152 that are configured to supply fluid to the opening 46 at various pressures to drive the first seat 38 away from the ball 16 during certain portions of the opening stroke and during certain portions of the closing stroke, and other components.

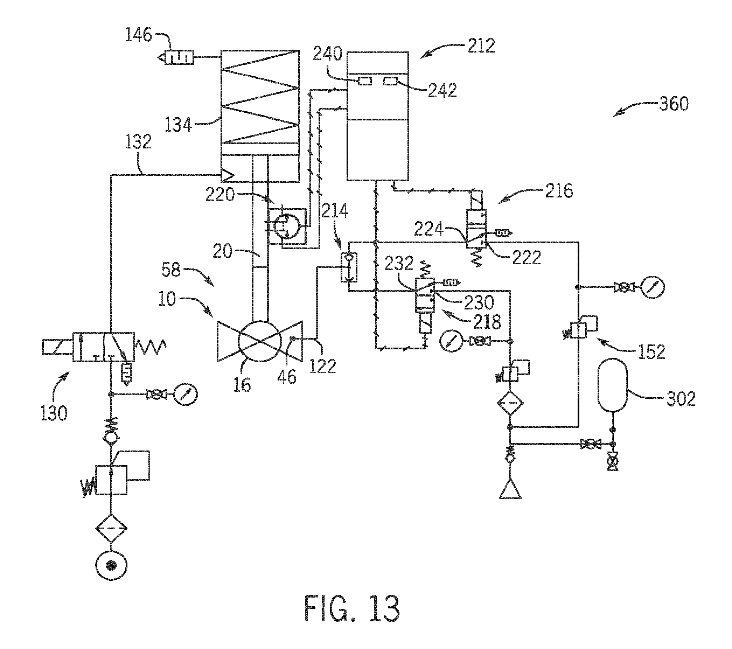

FIG. 13 is a schematic diagram of a system 360 (e.g., pneumatic system) having an electronic controller 212 and that is configured to control a position of the first seat 38 of the ball valve 10. The system 360 is configured to provide a fluid flow (e.g., pressurized gas) from the pneumatic header 302 to adjust the seat 38 in a similar manner as described above with respect to FIG. 8. For example, as shown, the system 360 includes the valve 130, the valves 214, the valve 216, the valve 218, the sensor 220, and the pressure regulator 152 that are configured to supply fluid to the opening 46 at various pressures to drive the first seat 38 away from the ball 16 during certain portions of the opening stroke and during certain portions of the closing stroke, and other components.

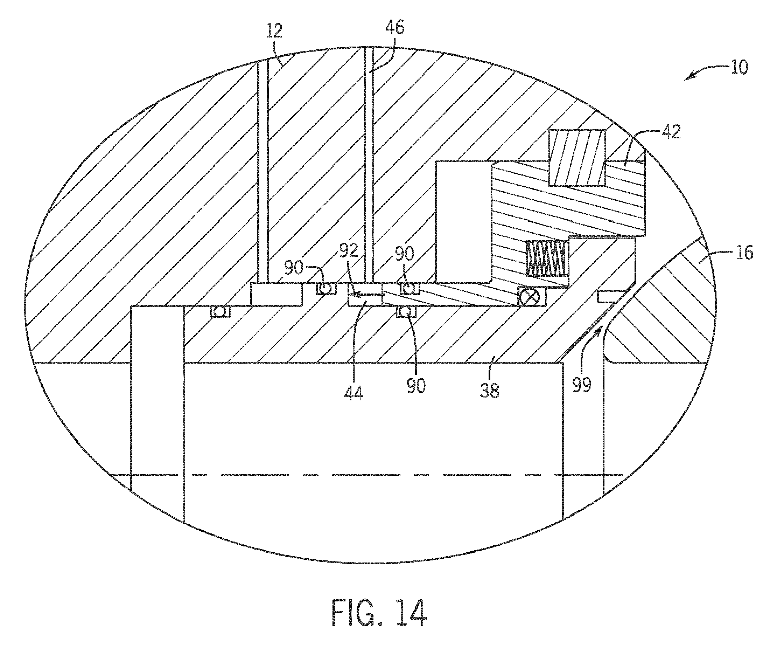

It should be understood that the method 100 of FIG. 4 and the various systems described with respect to FIGS. 5-13 may be utilized with ball valves having various structural features. For example, the opening 46 and the space 44 may be located at any suitable position that enables the fluid to exert the force 92 on the first seat 38 to drive the first seat 38 away from the ball 16. FIG. 14 is a cross-sectional side view of an alternative arrangement of components within the portion of the ball valve 10 of FIG. 2. In the illustrated embodiment, the retainer 42 is coupled to the body 12 of the ball valve 10. The space 44, which is sealed by multiple annular seals 90, is configured to receive fluid via the opening 46. The fluid exerts the force 92 on the first seat 38, thereby driving the first seat 38 away from the ball 16. For example, in the illustrated embodiment, the force 92 exerted by the fluid in the space 44 drives the first seat 38 axially away from the ball, causing the first seat 38 to separate from the ball 16 by the gap 99.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modifications, equivalents, and alternatives falling within the spirit and scope of the invention as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A system, comprising:
a ball valve comprising a ball and an annular seat;
a valve configured to enable a flow of fluid at a first pressure to drive the annular seat of the ball valve away from the ball when the valve is in a first position, and configured to enable a flow of fluid at a second pressure to drive the annular seat of the ball valve away from the ball when the valve is in a second position.

2. The system of claim 1, wherein the valve is a cam-operated valve that is adjusted between the first position and the second position via rotation of a stem coupled to the ball of the ball valve.

3. The system of claim 1, wherein the valve is configured to be in the first position as the ball rotates through a first portion of its rotational path and to be in the second position as the ball rotates through a second portion of its rotational path, wherein the first portion comprises approximately 5 to 25 degrees of the rotational path.

4. The system of claim 1, wherein the first pressure is less than the second pressure.

5. The system of claim 1, wherein the first pressure is configured to reduce a contact force between the annular seat and the ball without separating the annular seat from the ball, and the second pressure is configured to separate the annular seat from the ball.

6. The system of claim 1, comprising a pilot valve that is configured to adjust between a first position in which the pilot valve vents the opening and blocks the flow of fluid to the opening and a second position in which the pilot valve enables the flow of fluid to the opening.

7. The system of claim 6, wherein the pilot valve is configured to be in the first position during a closing stroke of the ball valve and to be in the second position during an opening stroke of the ball valve.

8. The system of claim 6, comprising a solenoid valve, wherein actuation of the solenoid valve is configured to cause rotation of the ball and adjustment of the pilot valve.

9. The system of claim 1, comprising a pressure regulator and a diverter valve, wherein the valve enables the flow of fluid at the second pressure to drive the annular seat by causing the diverter valve to bypass the pressure regulator when the valve is in the second position.

10. A method, comprising:
flowing a fluid at a first pressure to an opening in a body of a ball valve to drive an annular seat of the ball valve away from a ball of the ball valve during a first portion of an opening stroke; and
flowing a fluid at a second pressure, different from the first pressure, to the opening in the body of the ball valve to drive the annular seat away from the ball during a second portion of the opening stroke.

11. The method of claim 10, comprising flowing a fluid to the opening in the body of the ball valve to drive the annular seat away from the ball during a portion of the closing stroke.

12. The method of claim 11, wherein the portion of the closing stroke comprises approximately 1 to 15 degrees of the closing stroke.

13. The method of claim 11, comprising venting the opening to enable the annular seat to seal against the ball during another portion of the closing stroke.

14. The method of claim 10, comprising venting the opening to enable the annular seal to seat against the ball while the ball valve is in a closed position.

15. The method of claim 10, wherein the first pressure is less than the second pressure.
